# EUROPÄISCHE PATENTSCHRIFT

(11) **EP 1 764 563 B1**
(45) Veröffentlichungstag und Bekanntmachung des Hinweises auf die Patenterteilung: **10.09.2014**
(21) Anmeldenummer: 06019301.8
(22) Anmeldetag: 15.09.2006
(51) Int. Cl.: F24D 3/08, F24D 11/00, F24D 19/10, F24J 2/40

(54) **Solarregler und Verfahren zum Regeln einer Solarkollektoranlage**
Solar regulator and method for regulating a solar collector installation
Régulateur solaire et méthode pour régler une installation de collecteurs solaires

(30) Priorität: 19.09.2005 DE 102005044670
(43) Veröffentlichungstag der Anmeldung: 21.03.2007
(73) Patentinhaber: ROBERT BOSCH GMBH, 70442 Stuttgart (DE)
(72) Erfinder: Lustig, Konrad, Dr., 73730 Esslingen (DE)

(56) Entgegenhaltungen:
- DE-A1- 4 112 758
- DE-A1- 10 334 436
- DE-B3- 10 320 292

## Beschreibung

### Stand der Technik

Die Erfindung betrifft ein Verfahren zur Regelung von Umwälzpumpen in Solaranlagen mit einem Sonnenkollektor. Ferner betrifft die Erfindung eine Steuervorrichtung zur Durchführung des Verfahrens.

Der Einsatz von Solarreglern zur Steuerung von Umwälzpumpen in Solarkollektorkreisen herkömmlicher Anlagen zur solaren Brauchwassererwärmung ist zum Beispiel aus DE 198 24 543 C1 bekannt. Eine solche herkömmliche Solarkollektoranlage besteht in der Regel aus einem typischerweise auf dem Dach eines Gebäudes angeordneten Solarkollektor und einem in der Regel im Keller des selben Gebäudes untergebrachten Wärmespeicher, die über zwei Leitungen, einer Vor- und einer Rücklaufleitung, miteinander verbunden sind. In dem aus dem Solarkollektor, dem Wärmespeicher und den beiden Leitungen gebildeten Kreislauf zirkuliert ein spezielles Wärmeträgerfluid. Die Umwälzpumpe fördert die Flüssigkeit aus einem Speicher zu dem Solarkollektor, in dem das Fluid erwärmt wird. Die gleiche Pumpe fördert das erwärmte Fluid anschließend wieder in den Speicher zurück. Die Steuerung der Pumpe erfolgt in der Regel mittels eines zentralen Solarreglers in Abhängigkeit von der Fluidtemperatur im Kollektor und im Speicher.

Zur Erfassung dieser Temperaturen ist im Bereich des Kollektors und typischerweise auch im Wärmespeicher jeweils ein Temperaturfühler angeordnet. Die Anordnung des Temperaturfühlers im Bereich des Kollektors ist jedoch nicht unproblematisch, da die Verlegung des Kabel bis auf das Dach im allgemeinen schwierig und aufwändig ist und Fehler bei der Montage des Kollektorfühlers auftreten können.

Um derartige Probleme zu vermeiden, sieht die DE 103 34 436 A1 vor, den Kollektorfühler durch einen in der Rücklaufleitung angeordneten Temperaturfühler zu ersetzen. Zur Messung der aktuellen Kollektortemperatur wird die Pumpe kurzzeitig betrieben, sodass der im Kollektor befindliche Wärmeträger zu dem in der Rücklaufleitung angeordneten Temperaturfühler fließt. Ferner schlägt diese Druckschrift vor, den Speicherfühler durch einen in der Vorlaufleitung angeordneten Temperaturfühler zu ersetzen. Analog zu den vorgenannten Prinzip gelangt bei dem kurzzeitigen Betrieb der Pumpe der im Speicher befindliche Wärmeträger zu dem in der Vorlaufleitung angeordneten Temperaturfühler.

Dokument DE 10 334 436 offenbart die Präambel von Anspruch 1.

Allerdings bedingt diese vereinfachte Anordnung der Temperaturfühler in der Vor- bzw. der Rücklaufleitung gegenüber einer herkömmlichen Temperaturfühleranordnung im Bereich des Kollektors bzw. im Speicher eine Ertragseinbuße von ca. 10 %. Diese Ertragseinbuße resultiert aus der Tatsache, dass zum Erfassen der Kollektortemperatur zunächst die Pumpe eingeschaltet werden muss, bevor die tatsächliche Kollektor- bzw. Speichertemperatur erfasst werden kann.

Insbesondere bei schlechten Wetterverhältnissen und nicht ausreichender Sonneneinstrahlung, wenn die Kollektortemperatur niedriger ist als die Speichertemperatur, kommt es auf Grund des kurzzeitigen Betriebs der Umlaufpumpe zu Wärmeverlusten im Speicher und damit zu den oben genannten Ertragseinbußen.

Die Aufgabe der vorliegenden Erfindung ist es daher, ein Verfahren zum Regeln einer Solaranlage zur Verfügung zu stellen, mit dem die oben genannten Ertragseinbuße, die mit der Anordnung der Temperaturfühler in den Leitungen einhergeht, reduziert werden können. Ferner ist es Aufgabe der Erfindung eine Steuervorrichtung zur Durchführung des Verfahrens bereitzustellen. Diese Aufgabe wird durch ein Verfahren nach Anspruch 1 und sowie eine Vorrichtung nach Anspruch 12 gelöst. Vorteilhafte Ausführungsformen sind in den abhängigen Ansprüchen angegeben.

Gemäß der Erfindung ist vorgesehen, dass ein Wärmeträger mittels einer Pumpe gefördert wird und dabei nacheinander eine Rücklaufleitung, einen Kollektor und eine Vorlaufleitung durchströmt, wobei die Pumpe mittels einer Steuervorrichtung in Abhängigkeit von einer gemessenen Vor- und/oder Rücklauftemperatur des Wärmeträgers gesteuert wird, und wobei in einem Testzyklus die Pumpe eine voreingestellte Testzykluszeitdauer eingeschaltet wird, um die Vorlauftemperatur des Wärmeträgers in der Vorlaufleitung sowie die Rücklauftemperatur des Wärmeträgers in der Rücklaufleitung zu messen. Es ist dabei vorgesehen, dass die Steuervorrichtung nach Ablauf des Testzyklus in einen Pausenzyklus wechselt, sofern am Ende des Testzyklus die Temperaturdifferenz zwischen der Vor- und der Rücklauftemperatur einen vorgegebenen Wert nicht erreicht, wobei die Pumpe während des Pausenzyklus ausgeschaltet ist, und wobei die Zeitdauer des Pausenzyklus von der maximalen Vorlauftemperatur abhängt. Vorteilhaft bei dem erfindungsgemäßen Verfahren ist, dass die Pumpe bei geringer Temperaturdifferenz, insbesondere infolge geringer Sonneneinstrahlung ausgeschaltet wird. Hierdurch kann der Ertrag gesteigert werden. Durch die Abhängigkeit der Dauer des Pausenzyklus von der ermittelten Temperaturdifferenz können unnötige Testzyklen vermieden werden, wodurch der Ertrag weiter gesteigert werden kann.

In einer weiteren Ausführungsform der Erfindung ist vorgesehen, dass die Steuervorrichtung nach Ablauf des Testzyklus nicht in den Pausenzyklus wechselt und die Pumpe weiter eingeschaltet bleibt, sofern die am Ende des Testzyklus ermittelte Temperaturdifferenz mindestens dem vorgegebenen Wert entspricht und keine Ausschaltbedingung vorliegt. Diese Maßnahme stellt sichergestellt, dass die Pumpe außerhalb des Testbetriebs nur bei ausreichender Sonneneinstrahlung läuft, so dass Wärme effektiv gewonnen wird.

Ferner sieht eine weitere vorteilhafte Ausführungsform der Erfindung vor, dass die Steuervorrichtung die Pumpe ausschaltet und in einen Pausenmodus wechselt, wenn nach Ablauf des Testzyklus eine Ausschaltbedingung erreicht wird. Hierdurch wird sichergestellt, dass die Pumpe nur weiterläuft, wenn keine Ausschaltbedingungen vorliegt. Als Ausschaltbedingung sieht eine weitere vorteilhafte Ausführungsform der Erfindung das Abfallen der aktuell ermittelten Temperaturdifferenz unterhalb des vorgegebenen Wertes. Ferner kann eine Ausschaltbedingung vorliegen, wenn die Vorlauftemperatur einen vorgegebenen Maximalwert erreicht. Durch die Wahl geeigneter Ausschaltbedingungen lässt sich der Regelungsprozess individuell anpassen.

Ferner sieht eine weitere Ausführungsform der Erfindung vor, dass die Steuervorrichtung im Pausenmodus nach Ablauf einer vorgegebenen Pausenzykluszeit automatisch in den Testmodus wechselt. Durch diese Maßnahme wird sichergestellt, dass die Regelung der Solaranlage auf veränderte Wetterverhältnisse reagieren kann.

In einer besonders vorteilhaften Ausführungsform der Erfindung wird die Pausenzykluszeit in Abhängigkeit von der maximalen Vorlauftemperatur adaptiv angepasst, wobei die Pausenzykluszeit verlängert wird, sofern die im Testzyklus gemessene maximale Vorlauftemperatur abnimmt, während die Pausenzykluslänge verkürzt wird, sofern die im Testzyklus gemessene maximale Vorlauftemperatur zunimmt. Diese Maßnahme erlaubt die Optimierung des Regelungsprozesses. Ferner lässt sich durch die adaptive Anpassung der Pausenzykluszeit der Ertrag deutlich steigern.

Ferner ist in einer weiteren Ausgestaltung des erfinderischen Verfahrens vorgesehen, dass auch die Testzykluslänge adaptiv angepasst wird. Hierzu wird die Pumpe eingeschaltet und die Vorlauftemperatur bis zu dem Zeitpunkt gemessen, in dem die Vorlauftemperatur nach Erreichen eines Maximums wieder sinkt. Als Testzykluslänge wird die Zeitspanne zwischen dem Start der Pumpe und dem Erreichen der maximalen Vorlauftemperatur gewählt. Durch diese Anpassung, die insbesondere nach Installation der Solaranlage oder nach Austausch- bzw. Wartungsarbeiten an der Solaranlage stattfindet, kann die Testzykluszeit optimal angepasst werden. Hierdurch lässt sich der Ertrag der Solaranlage weiter steigern.

Ferner ist in weiteren Ausführungsformen der Erfindung vorgesehen, dass die Durchführung der Testzyklen während Zeiten keiner oder geringer Sonneneinstrahlung abgeschaltet wird. Insbesondere während der Nacht kann durch diese vorteilhafte Maßnahme eine Ertragseinbuße aufgrund der Abkühlung eines Wärmespeichers vermieden werden.

In einer weiteren Ausführungsform der Erfindung erfolgt die Messung der Vor- und der Rücklauftemperatur mittels in der Vorlaufleitung bzw. in der Rücklaufleitung angeordneter Temperaturfühler. Die Anordnung der Temperaturfühler innerhalb der Leitungen erlaubt eine einfache Montage, insbesondere wenn die Temperaturfühler innerhalb einer Kompaktstation mitsamt dem Solarregler integriert werden.

Schließlich sieht eine Ausführungsform der Erfindung vor, dass die Vor- und die Rücklaufleitung den Kollektor mit einem Speicher verbinden, und dass die Steuervorrichtung in einem Kollektorkühlmodus schaltet, wenn die Speichertemperatur einen vorgegebenen Wert nahe einer maximalen Speichertemperatur erreicht, wobei die Pumpe im Kollektorkühlmodus getaktet betrieben wird, um die Temperatur im Speicher unterhalb einer maximalen Speichertemperatur zu halten, und wobei die Ausschaltzeiten der Pumpe während des Kollektorkühlbetriebs mithilfe des vorlauftemperaturabhängigen Adaption der Pausenzykluslänge bestimmt werden. Die Verwendung der vorlauftemperaturabhängigen Adaption der Pausenzykluslänge zur Bestimmung der Ausschaltzeiten der Pumpe erlaubt eine besonders einfache Realisation der Kollektorkühlfunktion.

Im folgenden wird die Erfindung anhand von Figuren näher dargestellt. Es zeigen:
Fig. 1 einen schematischen Aufbau einer herkömmlichen Solaranlage;
Fig. 2 schematisch einen verbesserten Aufbau einer Solaranlage zur Durchführung des erfindungsgemäßen Verfahrens;
Fig. 3 ein Diagramm zur Verdeutlichung einer vorlauftemperaturabhängigen Adaption der Pausenzyklen gemäß der Erfindung;
Fig. 4 ein Diagramm zur Verdeutlichung des qualitativen Verlaufs der Vor- und Rücklauftemperaturen;
Fig. 5 ein Diagramm zur Verdeutlichung einer zu kurz gewählten Testzykluslänge.

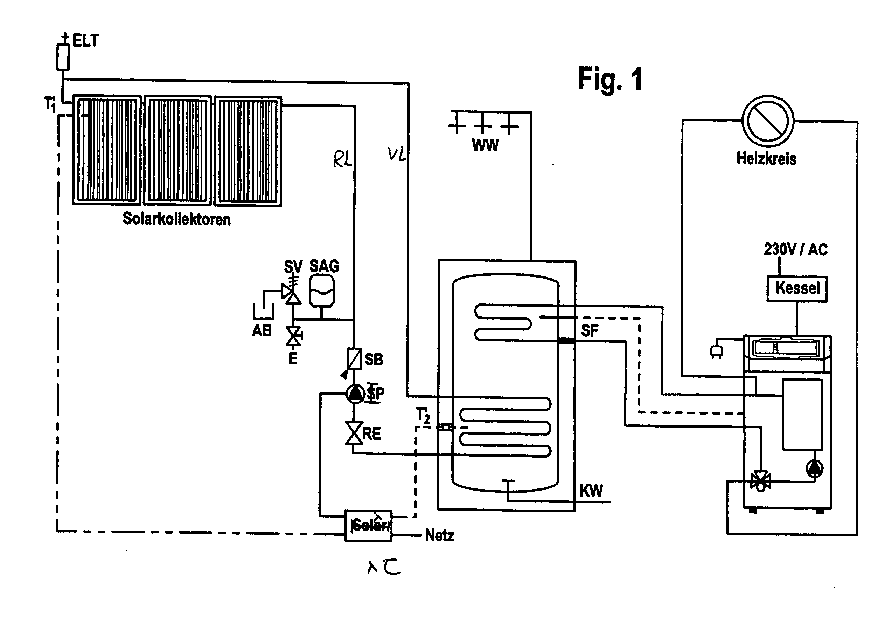

Die in **Figur 1** dargestellte herkömmliche Solaranlage weist eine auf dem Dach angeordneten Solarkollektor K auf, der über eine Vor- und eine Rücklaufleitung VL,RL mit einem Speicher S verbunden ist. Innerhalb des durch den Speicher S, den Kollektors K und den Leitungen VL,RL gebildeten Solarkreislaufs zirkuliert ein Wärmeträgerfluid, das mittels einer in der Rücklaufleitung RL angeordneter Solarpumpe P gefördert wird. Als Wärmeträger wird im allgemeinen eine Mischung aus Glykol und Wasser verwendet, um das Einfrieren im Winter zu vermeiden.

Zur Steuerung der Anlage dient eine zentrale Steuervorrichtung C, die den Pumpenbetrieb in Abhängigkeit von der Speicher- bzw. Kollektortemperatur regelt. Die Solarregelung C schaltet die Pumpe P dabei ein, sobald die Kollektortemperatur T_K größer als die Temperatur im unteren Speicherbereich T_S plus einer einstellbaren Einschalttemperaturdifferenz dT_ein ist (T_K > T_S + dT_ein). Die Pumpe wird ausgeschaltet, wenn diese Temperaturdifferenz dT_ein einen eingestellten Wert unterschreitet (T_K < T_S + dT_aus). Ferner wird die Pumpe P bei Vorliegen einer Ausschaltbedingung ausgeschaltet. Eine solche Ausschaltbedingung kann vorgesehen werden, wenn z.B. eine vorgegebene maximale Speichertemperatur T_S_max erreicht wird, bei der es zu Kalkablagerungen im Speicher oder zu Verbrühungen mit dem entnommenen Brauchwasser kommen kann. Ferner ist eine Abschaltung vorgesehen, wenn die Kollektortemperatur die Verdampfungstemperatur des Wärmeträgers (üblicherweise ca. 120°C) erreicht, so dass der Wärmeträger im Solarkreis verdampft. Die Pumpe P wird erst dann wieder eingeschaltet, wenn die Temperatur des Wärmeträgers wieder unterhalb eines kritischen Wertes gefallen ist.

Für diese Regelung ist die Ermittlung der Temperatur am Kollektor K (Absorbertemperatur) und im unteren Speicherbereich notwendig. Wie in Figur 1 dargestellt, dient zur Messung der Kollektortemperatur T_K ein im Bereich des Kollektors K angeordneter Temperaturfühler T₁'. Entsprechend wird die Temperatur T_S des Speichers S mittels eines im Speicherbereich angeordneten Temperaturfühlers T₂' ermittelt. Beide Temperaturfühler T₁',T₂' sind über Leitungen mit der Steuervorrichtung C verbunden.

Es hat sich gezeigt, dass bei der Montage der Temperaturfühler, insbesondere des Kollektorfühlers T₁, am häufigsten Fehler gemacht werden und die Solaranlagen aufgrund dessen nicht ordnungsgemäß funktionieren.

Um diese Fehler zu vermeiden, sind Solaranlagen vorgesehen, bei denen der Kollektorfühler durch einen in der Vorlaufleitung VL angeordneten Temperaturfühler T₁ ersetzt wird.

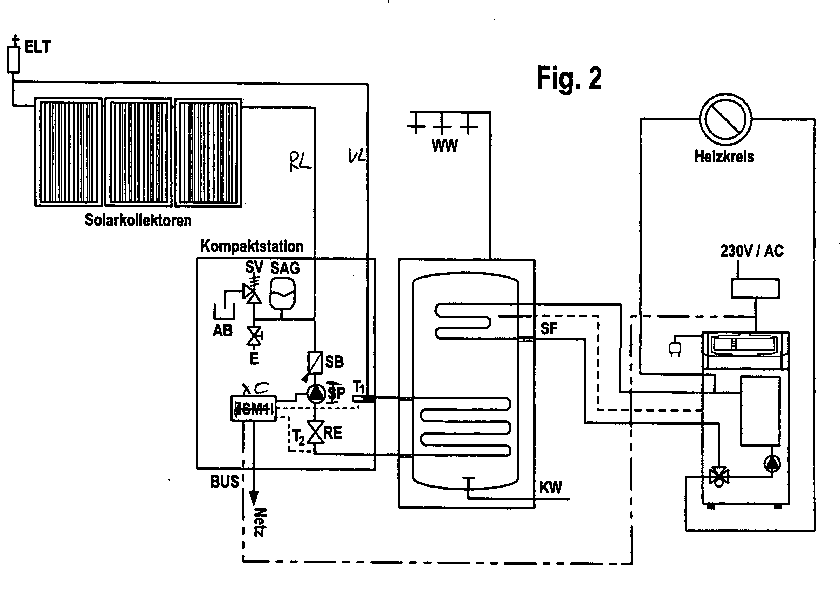

**Figur 2** zeigt den Aufbau einer solchen Solaranlage, wie sie z.B. auch in der DE 2658709 A1 dargestellt ist. Diese Solaranlage unterscheidet sich von der in Figur 1 gezeigten Anlage im Wesentlichen nur durch die Anordnung der Temperaturfühler T₁,T₂. Diese Anordnung hat während des Betriebs der Pumpe, wobei das Wärmeträgerfluid ständig umgewälzt wird keine ersichtlichen Nachteile gegenüber einer herkömmlichen Solaranlage mit einem Kollektorfühler. Da das Medium umgewälzt wird entsprechend die in der Vor- und Rücklaufleitung VL,RL gemessenen Temperaturen im wesentlichen der Kollektor- bzw. Speichertemperatur T_K,T_S. lediglich im Stillstand der Pumpe P ist der Steuervorrichtung die aktuelle Kollektor- bzw. Speichertemperatur T_K,T_S nicht bekannt.

Um die aktuelle Kollektortemperatur T_K ermitteln zu können, muss die Pumpe P für eine ausreichend lange Zeit in Betrieb genommen werden, so dass die im Kollektor K bzw. im Speicher S Wärme die entsprechenden Temperaturfühler T₁,T₂ in den Leitungen VL,RL erreicht.

Die in der Vor- bzw. Rücklaufleitung VL,RL gemessene Temperatur T_VL,T_RL spiegelt nicht die tatsächliche, sondern lediglich eine um Leitungsverluste erniedrigte Kollektor- bzw. Speichertemperatur. Zur Optimierung der Anlage können diese aus der Praxis bzw. Simulation ermittelten Abweichungen durch eine entsprechende Implementierung in der Steuervorrichtung C berücksichtigt werden.

Wie in Figur 2 gezeigt, wird durch die Anordnung der Temperaturfühler T₁,T₂ innerhalb der Vor- bzw. Rücklaufleitung VL,RL das Zusammenfassen der beiden Temperaturfühler T₁,T₂, der Pumpe P und der Steuervorrichtung C in einer gemeinsamen Kompaktstation ermöglicht. Es ist ferner vorteilhaft auch weitere Komponenten der Solaranlage, wie z.B. Absperr- und Ablaufventile oder ein zur Ausdehnung des Wärmeträgers vorgesehenes Ausdehnungsgefäß innerhalb der Kompaktstation unterzubringen.

Hierdurch wird der Aufwand bei der Montage der Solaranlage deutlich reduziert.

Allerdings weist die Anordnung der Temperaturfühler T₁,T₂ Leitungen VL,RL auch Nachteile auf. Um die Kollektortemperatur T_K bzw. die Speichertemperatur T_S ermitteln zu können, muss die Solarkreispumpe P für eine gewisse Zeit eingeschaltet werden. Insbesondere in Zeiten ungenügender Sonneneinstrahlung kann die Temperatur des Speichers S unnötig reduziert werden, der hierdurch kälteres Medium aus den Leitungsabschnitten im Außenbereich in den Speicher gelangt und gleichzeitig warmen Medium aus den Speicher S abgeführt wird. Auch der Stromverbrauch der Pumpe P während dieser Testzeiten führt im Endeffekt zur Reduktion des Ertrags.

Gegenüber einer Anlage mit Kollektorfühler kommt es bei dem oben beschriebenen Solarsystem ohne Kollektorfühler aufgrund der obengenannten Umstände somit zu einer Reduktion des jährlichen solaren Ertrags von ca. 10%. Der Hauptgrund dafür bildet die Kühlung des Speichers im Testzyklus bei nicht ausreichender Sonneneinstrahlungsleistung und laufender Pumpe P.

Zur Reduktion dieser Ertragseinbußen sieht die Erfindung Implementierung verschiedener Maßnahmen vor. Insbesondere ist vorgesehen, dass die Steuervorrichtung C nach Ablauf eines Testzyklus automatisch in einen Pausenmodus wechselt, sofern die im Testzyklus ermittelte maximale Temperaturdifferenz dT_max zwischen der Vor- und Rücklauftemperatur T_VL,T_RL einen vorgegebenen Wert dT_ein nicht erreicht. Dabei werden die Pausenzeiten t_pause zwischen zwei Testzyklen in Abhängigkeit der gemessenen Temperaturen T_VL,T_RL adaptiv angepasst. Eine weitere Maßnahme sieht die Abschaltung der Testzyklen während Zeiten unzureichender Sonneneinstrahlung vor. Ferner ist auch eine Adaption der Testzykluslänge vorgesehen. Hiermit kann die Testzyklusdauer t_test optimiert werden. Schließlich kann Mithilfe einer Kollektorkühlfunktion die Abschaltung der Pumpe P bei hoher Kollektortemperatur T_K verzögert werden, wodurch die Anlage flexibler betrieben werden kann.

Die einfachste Maßnahme zur Steigerung des Ertrags kann mit einer Implementierung einer automatischen Abschaltung des Testzyklus während Zeiten geringer Sonneneinstrahlung realisiert werden. Dabei wird die Ertragseinbuße einer Anlage ohne Kollektorfühler gegenüber dem Vergleichsystem mit Kollektorfühler beachtlich reduziert werden. So beträgt die Ertragseinbuße nur noch etwa die Hälfte (ca. 5%), wenn der Testzyklus zwischen 21 Uhr abends und 6 Uhr morgens ausgeschaltet wird. Diese Zeiten können vorzugsweise der Sonneneinstrahlungszeiten der jeweiligen Jahreszeit angepasst werden. Ferner ist es generell auch möglich kurzfristige Änderungen der Sonneneinstrahlung zu berücksichtigen, wie z.B eine über mehrere Tage dauernde Schlechtwetterperiode.

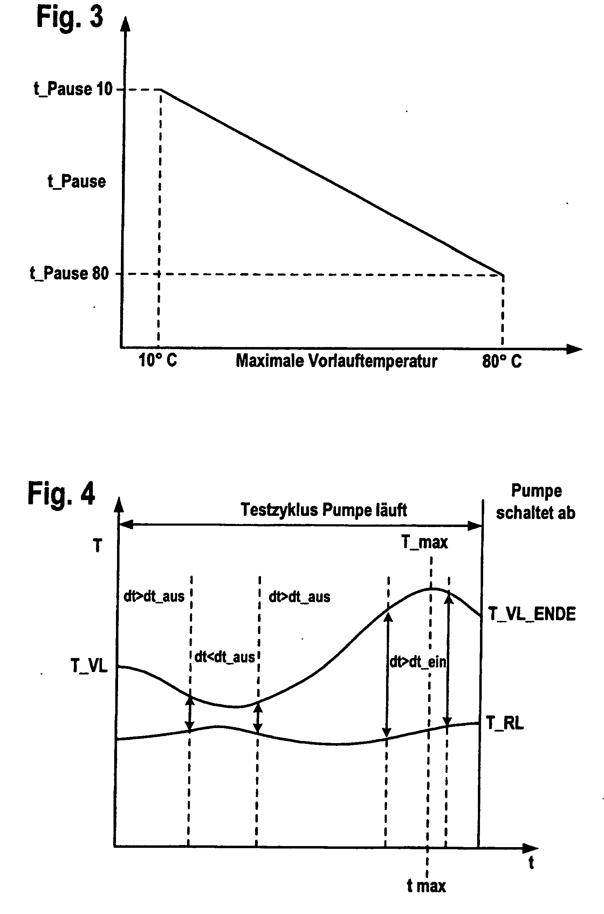

Eine wichtige Maßnahme stellt ferner die Adaption der Pausenzeiten t_pause zwischen den Testzyklen dar. **Figur 3** zeigt einen möglichen Verlauf der vorlauftemperaturabhängigen Pausenzeiten t_pause, wie er innerhalb der Steuervorrichtung als Algorithmus für die Adaption der Pausenzyklusdauer t_pause realisiert ist. Dabei ist in einem relativ weiten Temperaturbereich (hier z.B. von 10°C bis 80°C) vorzugsweise ein linearer Verlauf der Pausenzykluslänge t_pause in Abhängigkeit von der maximalen Vorlauftemperatur T_max vorgesehen. Wie aus der Figur 3 ersichtlich, nimmt die Pausenzykluslänge t_pause ab, sofern die maximale Temperatur T_max zunimmt. Andererseits erhöht der Solarregler C die Pausenzykluslänge t_pause, sofern die maximale Vorlauftemperatur T_max abfällt.

Je nach Anwendung kann jedoch auch ein anderer Zusammenhang zwischen der Pausenzykluslänge t_pause und der maximalen Vorlauftemperatur T_max vorgesehen sein. Insbesondere kann die Temperaturkurve im höheren Temperaturbereich z.B. bei einer Implementierung einer Kollektorkühlfunktion stark vom linearen Verlauf abweichen.

Für das adaptive Anpassen der Pauselängen t_pause ist es notwendig, die maximale Vorlauftemperatur T_max während des Testzyklus zu ermitteln. Ist die maximale Vorlauftemperatur T_max gering, wird die Pausenzeit t_pause vergrößert. Bei hoher maximaler Vorlauftemperatur T_max werden die Pausenzeiten t_pause hingegen verkürzt. Damit können Verluste, die die neue Solaranlage gegenüber einer Anlage mit Kollektorfühler an wechselhaften Tagen aufzeigt, weiter verringert werden. Die Ertragseinbuße wird mit dieser Maßnahme um zirka 1% verringert. Somit ergibt sich für eine Solaranlage mit implementierter nächtlicher Abschaltung und adaptiver Pausenlängenanpassung gegenüber dem Vergleichsystem mit Kollektorfühler insgesamt nur noch eine jährliche Ertragseinbuße von ca. 4%.

Um eine Regelung in einem großen Bereich bezüglich Leitungslängen und Kollektorflächen zu ermöglichen, ist es vorteilhaft, dass sich auch die Testzykluslänge t_test adaptieren lässt. Erweist sich die Testzykluszeit t_test als zu kurz gewählt, kann es vorkommen, dass das erwärmten Medium den Vorlauffühler T₁ nie erreicht und die Pumpe somit auch bei ausreichender Temperaturdifferenz dT nicht eingeschaltet wird. Hingegen treten bei den solaren Testzyklus unnötige Verluste auf, da der Speicher in diesem Fall z.B. bei unzureichender Sonneneinstrahlung über den Kollektor K gekühlt wird.

Es ist vorteilhaft die Adaption der Testzykluslänge t_test Vortragsreise unmittelbar nach der Installation der Anlage vorzunehmen. Der hierbei ermittelte Wert wird dann in der Regel beibehalten. Jedoch kann nach größeren Reparatur- bzw. Wartungsarbeiten eine erneute Ermittlung der optimalen Testzykluslänge t_test notwendig werden. Der bei der Adaption ermittelte Wert ist jedoch in einem sinnvollen Bereich beschränkt (z.B. entspricht die Testzeit für Leitungslängen von 5 bis 20 m in etwa 180 s). Für größere Anlagen ist es notwendig einen Wert für die Leitungslängen einzustellen, aus dem sich ein geänderter Wertebereich ergibt.

Der Adaptionsvorgang für den Testzyklus wird nun im folgenden anhand eines Diagramms erläutert.

Dazu zeigt **Figur 4** einen qualitativen Verlauf der Vor- und Rücklauftemperaturen T_VL,T_RL in einem Testzyklus. Durch die Auswertung des Temperaturverlaufs lässt sich eine Optimierung der Testzeit durchführen. Bei dieser Adaption wird ausgenutzt, dass (bei laufender Pumpe P) der Temperaturverlauf in der Vorlaufleitung VL ein Maximum aufweist, dass sich aus der gespeicherte Energie im Kollektor K ergibt. Wie in Figur 4 dargestellt, fällt die Vorlauftemperatur hier nach dem Einschalten der Pumpe P zunächst ab, da angenommen wurde, dass die Außentemperatur kälter ist als die Raumtemperatur. Die Rücklauftemperatur T_RL steigt gleichzeitig an, da wärmeres Medium aus dem Speicherwärmetauscher am Fühler T₁ vorbeiströmt. Der folgende Anstieg der Temperatur am Vorlauffühler T₁ zeigt, dass aufgeheizte Flüssigkeit aus den Kollektor K den Fühler T₁ erreicht. Zunächst wird dabei die Ausgeschalttemperaturdifferenz dT_aus der Pumpe P überschritten. Im weiteren Verlauf wird auch die Einschalttemperaturdifferenz dT_ein überschritten. Dann erreicht die Temperatur T_VL am Vorlauffühler T₁ das Maximum und sinkt anschließend wieder ab, da die gespeicherte Energie in Kollektor entnommen wurde und die Sonneneinstrahlung nicht ausreicht, um den Kollektor weiter kontinuierlich zu erwärmen. Am Ende des Testperiode liegt die Temperaturdifferenz dT aus Vor- und Rücklauftemperatur T_VL,T_RL unter der Einschalttemperaturdifferenz dT_ein und die Pumpe P schaltet ab. Als ideale Testzykluslänge kann nun die Zeitspanne zwischen dem Start der Pumpe P und den Zeitpunkt t_max, an dem das Temperaturmaximum T_max erreicht wurde, adaptiert werden.

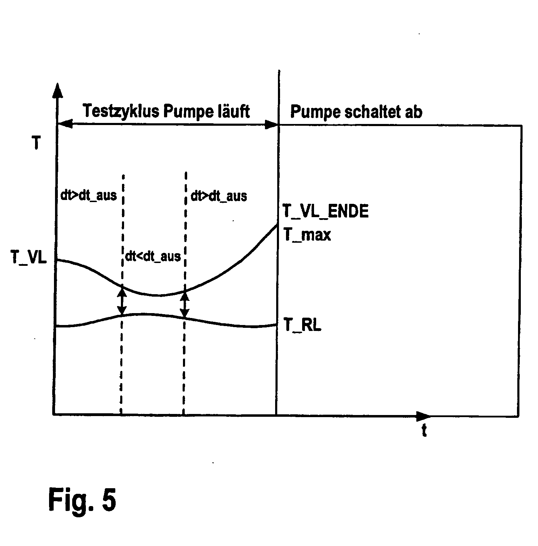

**Figur 5** zeigt den qualitativen Verlauf der Vor- und Rücklauftemperaturen bei einer zu kurz gewählten Zykluslänge. In diesem Fall erreicht die Temperaturdifferenz dT zu keiner Zeit die für das Vorliegen einer Einschaltbedingung notwendigen Einschaltdifferenz dT_ein. Da der Testzyklus während des Anstiegs der Vorlauftemperatur T_VL endete, entspricht die am Ende des Testzyklus gemessene Vorlauftemperatur T_VL_ENDE der maximalen Vorlauftemperatur T_max. Ferner liegt dort eine positive Steigerung der Temperaturkurve vor. Mithilfe dieser beiden Voraussetzungen lässt sich eine zu kurz gewählten Testzykluslänge eindeutig erkennen. Um die optimale Testzykluslänge zu erreichen, wird die Testzykluszeit im vorliegenden Fall vergrößert bis die Temperaturkurve wieder abfällt, sodass sich ein Temperaturverlauf bis zum erreichen der maximalen Vorlauftemperatur T_max entsprechend der Figur 4 ergibt.

Im Unterschied zu einem Kollektorsystem mit einem im Bereich des Kollektors K angeordneten Temperaturfühler T₁, muss in dem in der Figur 2 dargestellten Solaranlage die Pumpe P bei erreichen einer maximalen Rücklauftemperatur dauerhaft bis zum Abend abgeschaltet werden, um ein Überhitzen des Speichers zu vermeiden. Insbesondere im Stillstand der Anlage kann sich der Kollektor K bei starker Sonneneinstrahlung dermaßen aufheizen, dass das Wärmeträgermedium verdampft und in ein spezielles Ausdehnungsgefäß verdrängt wird. In diesem Fall kann trotz des Einschaltens der Pumpe P nicht sichergestellt werden, dass das Wärmeträgermedium umgewälzt wird, da sich Dampf im Kollektor K befindet und die Pumpe P die nötige Druckdifferenz für das Umwälzen u.U. nicht bereitstellen kann.

Ein Kollektorfühler T₁ wird heute auch verwendet, um zu dektieren, ob der Dampf im Kollektor K kondensiert ist und der Kollektor K aus dem Ausdehnungsgefäß wiederbefüllt worden ist. Dies ist üblicherweise bei ca. 120 °C der Fall. Ab dieser gemessenen Absorbertemperatur wird bei bisherigen Solarreglern C die Pumpe P wieder eingeschaltet und das Wärmeträgerfluid kann wieder zirkulieren. Bei einem Regler der Kollektorfühler ist die Kollektortemperatur T_K jedoch nur bekannt, wenn die Pumpe P läuft. Aus diesem Grund muss die Pumpe P solange ausgeschaltet bleiben, bis sichergestellt werden kann, dass sich kein Dampf im Kollektor K mehr befindet. Dies ist üblicherweise erst dann gewährleistet, wenn die Sonne am Abend untergegangen ist. Sofern zwischenzeitlich Kaltwasser gezapft wird oder Wolken aufziehen und die Kollektortemperatur unter 120 °C sinkt, wird das nur von einer Solaranlage mit Kollektorfühler erkannt. Aufgrund dessen ergibt sich bei einer Solaranlage ohne Kollektorfühler ein jährlicher Ertragsverlust von ca. 4% gegenüber einer herkömmlichen Anlage.

Eine Möglichkeit diese Verluste zu verringern stellt die so genannte Kollektorkühlfunktion dar, die heute in manchen Reglern für andere Zwecke implementiert ist. Hierbei wird von erreichen der maximalen Speichertemperatur T_S_max die Pumpe P getaktet betrieben und somit die Kollektortemperatur T_K im Mittel erhöht. Dadurch verringert sich die Effizienz des Kollektors und der Abschaltzeitpunkt wird verzögert oder sogar ganz vermieden, da die Speichertemperatur T_S knapp unterhalb der maximalen Speichertemperatur T_S_max bleibt.

Für den neuartigen Regler C ist diese Funktion einfach anzuwenden, da hierzu die erfindungsgemäße vorlauftemperaturabhängige Pausenadaption verwendet werden kann. Steigt die Kollektortemperatur T_K beispielsweise schnell an, werden die Pausenzeiten t_pause verkürzt. Hiermit können konstant maximale Vorlauftemperaturen T_VL von z.B. 100 °C eingeregelt werden. Im Kollektorkühlmodus muss jedoch der Algorithmus für die Abschaltung der Pumpe P bei maximaler Rücklauftemperatur T_RL angepasst werden. Diese Abschaltung erfolgt üblicherweise zur Vermeidung der Speicherüberhitzung. In diesem Fall darf die Rücklauftemperatur T_RL zu Beginn des Kühlzyklus den eingestellten Maximalwert nicht überschreiten, da die Rücklauftemperatur im späteren Verlauf durch die angehobene Vorlauftemperatur T_VL ebenfalls steigt und über den Maximalwert ansteigen würde. Diese Temperatur entspricht dann jedoch nicht der aktuellen Speichertemperatur T_S. Die entsprechende Zeitspanne für den Kühlzyklus lässt sich dabei simulationstechnisch ermitteln.

## Patentansprüche

1. Verfahren zum Regeln einer Solaranlage, bei der ein Wärmeträger mittels einer Pumpe (P) gefördert wird und dabei nacheinander eine Rücklaufleitung (RL), einen Kollektor (K) und
eine Vorlaufleitung (VL) durchströmt,
wobei die Pumpe (P) mittels einer Steuervorrichtung (C) in Abhängigkeit von einer in der Vorlaufleitung (VL) gemessenen Vorlauftemperatur (T_VL) und/oder einer in der Rücklaufleitung (RL) gemessenen Rücklauftemperatur (T_RL) des Wärmeträgers gesteuert wird, und
wobei in einem Testzyklus die Pumpe (P) für eine voreingestellte Zeitdauer (dt test) eingeschaltet wird, um die Vor- bzw. die Rücklauftemperatur (T_VL,T_RL) zu messen,
**dadurch gekennzeichnet,**
**dass** die Steuervorrichtung (C) nach Ablauf des Testzyklus in einen Pausenzyklus wechselt, sofern am Ende des Testzyklus die Temperaturdifferenz (dT) zwischen der Vor- und der Rücklauftemperatur (T_VL,T_RL) einen vorgegebenen Wert (dT_ein) nicht erreicht,
wobei die Pumpe (P) während des Pausenzyklus ausgeschaltet ist, und
wobei die Zeitdauer (dt_pause) des Pausenzyklus von der im Testzyklus gemessenen maximalen Vorlauftemperatur (T_max) abhängt.

2. Verfahren nach Anspruch 1,
**dadurch gekennzeichnet,**
**dass** eine Ausschaltbedingung vorliegt, wenn die aktuell ermittelte Temperaturdifferenz (dT) abfällt und dabei den vorgegebenen Wert (dT_aus) unterschreitet, und/oder
wenn die Vorlauftemperatur (T_VL) einen vorgegebenen Maximalwert erreicht.

3. Verfahren nach Anspruch 2,
**dadurch gekennzeichnet,**
**dass** die Steuervorrichtung (C) nach Ablauf des Testzyklus nicht in den Pausenzyklus wechselt und die Pumpe (P) weiter eingeschaltet bleibt, sofern die am Ende des Testzyklus ermittelte Temperaturdifferenz (dT) mindestens dem vorgegebenen Wert (dT_ein) entspricht und keine Ausschaltbedingung vorliegt.

4. Verfahren nach einem der Ansprüche 2 bis 3, **dadurch gekennzeichnet,**
**dass** die Steuervorrichtung (C) die Pumpe (P) ausschaltet und in einen Pausenzykluswechselt, wenn nach Ablauf des Testzyklus eine Ausschaltbedingung erreicht wird.

5. Verfahren nach einem der vorhergehenden Ansprüche, **dadurch gekennzeichnet,**
**dass** die Steuervorrichtung (C) im Pausenzyklus nach Ablauf der vorgegebenen Pausenzykluszeit (dt_pause) automatisch in den Testzykluswechselt.

6. Verfahren nach einem der vorhergehenden Ansprüche, **dadurch gekennzeichnet,**
**dass** die Pausenzykluszeit (dt_pause) in Abhängigkeit von der maximalen Vorlauftemperatur (T_max) adaptiv angepasst wird, wobei die Pausenzykluslänge (dt_pause) verlängert wird, sofern die im Testzyklus gemessene maximale Vorlauftemperatur (T_max) abnimmt,
während die Pausenzykluslänge (dt_pause) verkürzt wird, sofern die im Testzyklus gemessene maximale Vorlauftemperatur (T_max) zunimmt.

7. Verfahren nach einem der vorhergehenden Ansprüche, **dadurch gekennzeichnet,**
**dass** die Testzykluslänge (dt_test) adaptiv angepasst wird, wobei die Pumpe (P) eingeschaltet und die Vorlauftemperatur (T_VL) bis zu dem Zeitpunkt gemessen wird, in dem die Vorlauftemperatur (T_VL) ein Maximum (T_max) erreicht und wieder absinkt, und
wobei als Testzykluslänge (dt_test) die Zeitspanne zwischen dem Start der Pumpe (P) und dem Erreichen der maximalen Vorlauftemperatur (T_max) gewählt wird.

8. Verfahren nach einem der vorhergehenden Ansprüche, **dadurch gekennzeichnet,**
**dass** die Durchführung der Testzyklen während Zeiten keiner Sonneneinstrahlung abgeschaltet wird.

9. Verfahren nach einem der vorhergehenden Ansprüche, **dadurch gekennzeichnet,**
**dass** die Durchführung der Testzyklen während der Nacht abgeschaltet wird.

10. Verfahren nach einem der vorhergehenden Ansprüche, **dadurch gekennzeichnet,**
**dass** die Messung der Vor- und der Rücklauftemperatur (T_VL,T_RL) mittels in der Vorlaufleitung (VL) bzw. in der Rücklaufleitung (RL) angeordneter Temperaturfühler (T₁,T₂) erfolgt.

11. Verfahren nach Anspruch 6,
**dadurch gekennzeichnet,**
**dass** der Kollektor (K) über die Vor- und die Rücklaufleitung (VL,RL) mit einem Speicher (S) verbunden ist, und
**dass** die Steuervorrichtung (C) in einem Kollektorkühlmodus schaltet, wenn die Speichertemperatur (T_S) einen vorgegebenen Wert nahe einer maximalen Speichertemperatur (T_S_max) erreicht,
wobei die Pumpe (P) im Kollektorkühlmodus getaktet betrieben wird, um die Temperatur im Speicher (S) unterhalb einer maximalen Speichertemperatur (T_S_max) zu halten, und
wobei die Ausschaltzeiten der Pumpe (P) während des Kollektorkühlbetriebs mithilfe der vorlauftemperaturabhängigen Adaption der Pausenzykluslänge bestimmt werden.

12. Solaranlage, bei der ein Wärmeträger mittels einer Pumpe gefordert werden kann und dabei nocheinander eine Rücklaufleitung, einem Kollektor und eine Vorlaufleitung durch strömen kann, wobei die Pumpe mittels einer Steuervorrichtung in Abhängigkeit von einer in der Vorlaufleitung gemessener Vorlauftemperatur und/oder einer in der Rücklaufleitung gemessener Rücklauftemperatur des Warmeträgers gesteuert werden kann, und Steuervorrichtung zum Durchführen eines Verfahrens nach einem der Ansprüche 1 bis 11.

## Claims

1. Method for regulating a solar installation, in which a heat transfer medium is transported by means of a pump (P) and thereby flows successively through a return line (RL), a collector (K) and a flow line (VL),
wherein the pump (P) is controlled by means of a control device (C) in dependence on a flow temperature (T_VL), measured in the flow line (VL), and/or a return temperature (T_RL), measured in the return line (RL), of the heat transfer medium, and wherein, in a test cycle, the pump (P) is switched on for a preset time period (dt_test), in order to measure the flow temperature (T_VL) and the return temperature (T_RL),
**characterized**
**in that**, after the test cycle has run, the control device (C) changes to a pause cycle if at the end of the test cycle the temperature difference (dT) between the flow temperature (T_VL) and the return temperature (T_RL) does not reach a predetermined value (dT_on),
wherein the pump (P) is switched off during the pause cycle, and
wherein the time period (dt_pause) of the pause cycle depends on the maximum flow temperature (T_max) measured in the test cycle.

2. Method according to Claim 1,
**characterized**
**in that** a switch-off condition is satisfied if the temperature difference (dT) determined at the given time falls and thereby goes below the predetermined value (dT_off), and/or
if the flow temperature (T_VL) reaches a predetermined maximum value.

3. Method according to Claim 2,
**characterized**
**in that**, after the test cycle has run, the control device (C) does not change to the pause cycle and the pump (P) remains switched on if the temperature difference (dT) determined at the end of the test cycle at least corresponds to the predetermined value (dT_on) and a switch-off condition is not satisfied.

4. Method according to either of Claims 2 and 3, **characterized**
**in that** the control device (C) switches off the pump (P) and changes to a pause cycle if, after the test cycle has run, a switch-off condition is achieved.

5. Method according to one of the preceding claims, **characterized**
**in that** the control device (C) automatically changes to the test cycle after the predetermined pause cycle time (dt_pause) has elapsed.

6. Method according to one of the preceding claims, **characterized**
**in that** the pause cycle time (dt_pause) is adaptively adapted in dependence on the maximum flow temperature (T_max),
wherein the length of the pause cycle (dt_pause) is extended if the maximum flow temperature (T_max) measured in the test cycle decreases,
whereas the length of the pause cycle (dt_pause) is reduced if the maximum flow temperature (T_max) measured in the test cycle increases.

7. Method according to one of the preceding claims, **characterized**
**in that** the length of the test cycle (dt_test) is adaptively adapted,
wherein the pump (P) is switched on and the flow temperature (T_VL) is measured up to the point in time at which the flow temperature (T_VL) reaches a maximum (T_max) and falls again, and
wherein the time period between the starting of the pump (P) and the reaching of the maximum flow temperature (T_max) is chosen as the length of the test cycle (dt_test).

8. Method according to one of the preceding claims, **characterized**
**in that** the implementation of the test cycles is switched off during times when there is no solar radiation.

9. Method according to one of the preceding claims, **characterized**
**in that** the implementation of the test cycles is switched off during the night.

10. Method according to one of the preceding claims, **characterized**
**in that** the measurement of the flow temperature (T_VL) and the return temperature (T_RL) takes place by means of temperature sensors (T₁, T₂) respectively arranged in the flow line (VL) and in the return line (RL).

11. Method according to Claim 6,
**characterized**
**in that** the collector (K) is connected via the flow line (VL) and the return line (RL) to a storage unit (S), and
**in that** the control device (C) switches to a collector cooling mode if the storage temperature (T_S) reaches a predetermined value close to a maximum storage temperature (T_S_max),
wherein the pump (P) is operated in a cyclical manner in the collector cooling mode, in order to keep the temperature in the storage unit (S) below a maximum storage temperature (T_S_max), and wherein the switched-off times of the pump (P) during the collector cooling operation are determined with the aid of the flow-temperature-dependent adaptation of the length of the pause cycle.

12. Solar installation, in which a heat transfer medium can be transported by means of a pump and can thereby flow successively through a return line, a collector and a flow line, wherein the pump can be controlled by means of a control device in dependence on a flow temperature, measured in the flow line, and/or a return temperature, measured in the return line, of the heat transfer medium, and a control device for implementing a method according to one of Claims 1 to 11.

## Revendications

1. Procédé de régulation d'un équipement solaire, avec lequel un fluide caloporteur est transporté à l'aide d'une pompe (P) et s'écoule ainsi successivement à travers une conduite de retour (RL), un collecteur (K) et une conduite d'aller (VL),
la pompe (P) étant commandée à l'aide d'un dispositif de commande (C) en fonction d'une température d'aller (T_VL) mesurée dans la conduite d'aller (VL) et/ou d'une température de retour (T_RL) mesurée dans la conduite de retour (RL) du fluide caloporteur, et
dans un cycle de test, la pompe (P) étant mise en marche pendant une durée (dt_test) préréglée afin de mesurer la température d'aller ou de retour (T_VL, T_RL),
**caractérisé en ce que** le dispositif de commande (C), après écoulement du cycle de test, passe dans un cycle de pause dans la mesure où, à la fin du cycle de test, la différence de température (dT) entre la température d'aller et la température de retour (T_VL, T_RL) n'atteint pas une valeur (dT_ein) prédéfinie,
la pompe (P) étant mise à l'arrêt pendant le cycle de pause, et
la durée du cycle de pause (dt_pause) étant dépendante de la température d'aller maximale (T_max) mesurée au cours du cycle de test.

2. Procédé selon la revendication 1, **caractérisé en ce qu'**il existe une condition de mise à l'arrêt lorsque la différence de température (dT) actuellement déterminée chute et devient alors inférieure à la valeur (dT_aus) prédéfinie et/ou lorsque la température d'aller (T_VL) atteint une valeur maximale prédéfinie.

3. Procédé selon la revendication 2, **caractérisé en ce que** le dispositif de commande (C) ne passe pas dans le cycle de pause après écoulement du cycle de test et la pompe (P) reste toujours en marche dans la mesure où la différence de température (dT) déterminée à la fin du cycle de test correspond au moins à la valeur (dT_ein) prédéfinie et qu'il n'existe aucune condition de mise à l'arrêt.

4. Procédé selon l'une des revendications 2 à 3, **caractérisé en ce que** le dispositif de commande (C) arrête la pompe (P) et passe dans un cycle de pause si une condition de mise à l'arrêt est atteinte après écoulement du cycle de test.

5. Procédé selon l'une des revendications précédentes, **caractérisé en ce que** le dispositif de commande (C) dans le cycle de pause passe automatiquement dans le cycle de test après écoulement du temps de cycle de pause (dt_pause) prédéfini.

6. Procédé selon l'une des revendications précédentes, **caractérisé en ce**
**que** le temps de cycle de pause (dt_pause) est adapté dynamiquement en fonction de la température d'aller maximale (T_max),
la durée du cycle de pause (dt_pause) étant prolongée dans la mesure où la température d'aller maximale (T_max) mesurée dans le cycle de test diminue,
alors que la durée du cycle de pause (dt pause) est raccourcie dans la mesure où la température d'aller maximale (T_max) mesurée dans le cycle de test augmente.

7. Procédé selon l'une des revendications précédentes, **caractérisé en ce**
**que** la durée du cycle de test (dt_test) est adaptée dynamiquement,
la pompe (P) étant mise en marche et la température d'aller (T_VL) étant mesurée jusqu'à l'instant auquel la température d'aller (T_VL) atteint un maximum (T_max) et baisse de nouveau, et
la durée du cycle de test (dt_test) choisie étant l'intervalle de temps entre le démarrage de la pompe (P) et le moment d'atteindre la température d'aller maximale (T_max).

8. Procédé selon l'une des revendications précédentes, **caractérisé en ce que** l'exécution des cycles de test est arrêtée pendant les périodes sans ensoleillement.

9. Procédé selon l'une des revendications précédentes, **caractérisé en ce que** l'exécution des cycles de test est arrêtée pendant la nuit.

10. Procédé selon l'une des revendications précédentes, **caractérisé en ce que** la mesure de la température d'aller et de retour (T_VL, T_RL) est réalisée à l'aide d'une sonde de température (T₁, T₂) disposée dans la conduite d'aller (VL) ou dans la conduite de retour (RL).

11. Procédé selon la revendication 6, **caractérisé en ce**
**que** le collecteur (K) est relié par le biais des conduites d'aller et de retour (VL, RL) avec un accumulateur (S), et
en ce que le dispositif de commande (C) commute dans un mode de refroidissement du collecteur lorsque la température de l'accumulateur (T_S) atteint une valeur prédéfinie proche d'une température d'accumulateur maximale (T_S_max),
la pompe (P) fonctionnant de manière cadencée dans le mode de refroidissement du collecteur afin de maintenir la température dans l'accumulateur (S) au-dessous d'une température d'accumulateur maximale (T_S_max), et
les temps d'arrêt de la pompe (P) pendant le mode de refroidissement du collecteur étant déterminés à l'aide de l'adaptation de la durée du cycle de pause en fonction de la température d'aller.

12. Équipement solaire, avec lequel un fluide caloporteur peut être transporté à l'aide d'une pompe et peut ainsi s'écouler successivement à travers une conduite de retour, un collecteur et une conduite d'aller, la pompe pouvant être commandée à l'aide d'un dispositif de commande en fonction d'une température d'aller mesurée dans la conduite d'aller et/ou d'une température de retour mesurée dans la conduite de retour du fluide caloporteur, et dispositif de commande pour mettre en oeuvre un procédé selon l'une des revendications 1 à 11.
